# EUROPEAN PATENT SPECIFICATION

(11) **EP 0 755 646 B1**
(45) Date of publication and mention of the grant of the patent: **12.06.2002**
(21) Application number: 96202986.4
(22) Date of filing: 09.11.1993
(51) Int. Cl.: A47J 41/02, B23K 1/00

(54) **Metallic evacuated double-walled vessel and production method therefor**
Metallbehälter mit evakuierter Doppelwand und dessen Herstellungsverfahren
Récipient métallique à double parois évacuée et son procédé de fabrication

(30) Priority: 12.11.1992 JP 30262192; 07.12.1992 JP 32704892
(43) Date of publication of application: 29.01.1997
(62) Divisional of application: 93402745.9
(73) Proprietor: NIPPON SANSO CORPORATION, Minato-ku, Tokyo (JP)
(72) Inventor: Ishii, Hiroshi, Minato-ku, Tokyo (JP); Satomi, Yasuhiko, Minato-ku, Tokyo (JP); Itoh, Seiichi, Minato-ku, Tokyo (JP); Otsuka, Eiji, Minato-ku, Tokyo (JP); Yamaki, Jun, Minato-ku, Tokyo (JP); Ochiai, Toshimitsu, Minato-ku, Tokyo (JP)
(74) Representative: Ilgart, Jean-Christophe

(56) References cited:
- EP-A- 0 497 064
- US-A- 3 953 757
- US-A- 4 251 595
- US-A- 5 153 977
- PATENT ABSTRACTS OF JAPAN vol. 11, no. 73 (E-486), 5 March 1987 & JP 61 228688 A (NEC CORP.), 11 October 1986,
- PATENT ABSTRACTS OF JAPAN vol. 16, no. 76 (C-914), 25 February 1992 & JP 03 267023 A (NIPPON SANSO KK), 27 November 1991,
- PATENT ABSTRACTS OF JAPAN vol. 14, no. 522 (C-914), 25 February 1990 & JP 02 215416 A (NIPPON SANSO KK), 28 August 1990,

## Description

The present invention relates to a metallic double-walled vessel such as a portable thermos, pot, jar or the like.

As a method for producing a metallic evacuated double-walled vessel, there are available such conventional methods as, for example, a method wherein the evacuation of the space between an inner and an outer vessel is carried out by means of a chip tube attached to the outer vessel, and the chip tube is then pressure welded and sealed (Japanese Patent Application, laid open number Sho 59-37914, Japanese Patent Application laid open number Sho 59-103633); a method wherein an evacuation opening is provided to the outer vessel, a brazing metal material is piled around the periphery of the evacuation hole, a sealing member is placed on top of this with an interval of space being maintained between the sealing member and the evacuation hole, heat evacuation is carried out in a vacuum heating furnace, after which, the temperature is raised to the melting temperature of the brazing metal material, the sealing member is brazed, and the vessel is thus vacuum sealed (Japanese Patent Application laid open number Sho 58-192516); and a method wherein a small hole or cut-out is punched in the outer vessel, a brazing metal material is disposed in the vicinity thereof, heat evacuation in a vacuum heating furnace is then performed, the temperature is raised to the melting temperature of the brazing metal material causing the it to melt and flow into the small hole or cut-out, thus vacuum sealing the vessel (Japanese Patent Application Hei 1-106925 (U.S. Patent No. 5,153,977), Utility Model Application Hei 1-106837 or European application 0,497,064).

In the above described method using a chip tube, because the chip tube projects out from the bottom of the outer vessel, it is necessary to attach a bottom cover in order to protect the chip tube. Accordingly, this is problematic because the height of the produced article becomes higher by the length of this protecting cover. Moreover, in the case of large capacity production, because it is necessary to seal and cut the chip tube for each article produced, operations become complicated. Moreover, as it is essential that the process for this sealing technique be highly accurate, great skill is required in the operation. Additionally, the seal is occasionally insufficient, giving rise to the problem that the degree of vacuum deteriorates and the thermal insulating ability is lost over time. Further, in a sealing method using a chip tube, in the case where evacuating the space between the inner and outer vessels, when stimulating the desorption of gas absorbed by the metallic surface by heating the entire vessel, the outer surface of the vessel is exposed to the atmosphere, and a reaction occurs with the oxygen in the atmosphere causing violent oxidation. Because the esthetic appearance and anti-corrosive character of the oxidized surface are impaired, it is necessary to provide a process step to eject such sub-standard articles. Accordingly, costs are increased.

On the other hand, in a sealing method using brazing material, in order to achieve good wettability of the sealant with respect to the material of the outer vessel, it is necessary to remove any superficial oxidants in the material of the evacuation opening periphery. As a method therefor, there is available a method wherein heating is carried out at a temperature of 950° C or above and at a pressure of 1x10⁻³ torr or less on stainless steel, which is preferably used in, for example, metallic isotherm bottles. In this case, a special vacuum heating furnace of the type which can be used at high temperatures of 950° C and above is necessary. Accordingly, this too is problematic because equipment costs become very expensive.

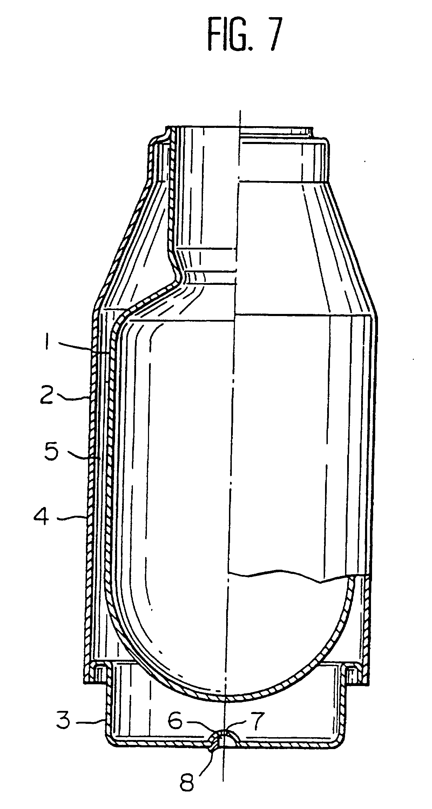

Figure 7 is provided in order to explain an example of the production method of a conventional metallic evacuated double-walled vessel. This method corresponds to an embodiment of US-A-5,153,977 and appears to be the closest to the invention. This figure shows the state of a metallic evacuated double-walled vessel prior to vacuum sealing. This prior to vacuum sealing vessel consists of an inner casing 1 which is cylindrical in shape and has a bottom, and an outer casing 4 which consists of a cylindrical outer casing body portion 2 and an outer casing bottom portion 3. The mouth portion of outer casing body portion 2 is air tightly joined to the mouth portion of inner casing 1. At the same time, outer casing bottom portion 3 is air tightly joined to the opening at one end of the vessel which is opposite the mouth portion of the outer casing body portion 2. Further, in the approximate center of the outer casing bottom portion 3, a concavity 6 which is indented inward toward inner casing 1 is formed. In the approximate center portion of this concavity 6, a small hole 7 (evacuation hole) or slit for evacuation is formed passing through a cavity 5 between the inner casing 1 and the outer casing 4.

In order to produce a metallic evacuated double-walled vessel by vacuum sealing this prior-to-sealing vessel, the vessel is inverted with the mouth portion of the prior-to-sealing vessel directed downward, a sealing hot charge 8, such as metallic brazing material, in a paste form is disposed in concavity 6, and the prior-to-sealing vessel is placed in a vacuum heating furnace. Melting and heating of the sealing hot charge 8 is carried out as the inside of the vacuum heating furnace is evacuate to a fixed degree of vacuum. The melted sealing hot charge 8 flows from the periphery therearound into the evacuation hole 7, plugging evacuation hole 7. Following this, sealing hot charge 8 is cooled and hardens, vacuum sealing evacuation hole 7. In this manner, a metallic evacuated double-walled vessel having an evacuated thermal insulating layer between the inner casing 1 and the outer casing 4 is produced.

### BRIEF DESCRIPTION OF THE FIGURES

Figure 1 is a front cross sectional view of a double-walled vessel prior to sealing, showing a first embodiment of the present invention.

Figure 2 is a view of the bottom surface of the same prior-to-sealing vessel.

Figure 3 is an enlarged cross sectional view of an essential composent of the evacuated double-walled vessel obtained by carrying out vacuum sealing to the same double-walled vessel.

Figure 4 is a front cross sectional view of a double-walled vessel prior to sealing, showing a second embodiment of the present invention.

Figure 5 is a bottom view showing an enlargement of an essential component of the same double-walled vessel.

Figure 6 is a front cross sectional view of the double-walled vessel prior to sealing showing a third embodiment of the present invention.

Figure 7 is a front cross sectional view of a prior-to-sealing vessel which is provided to explain the conventional art related to the present invention.

### Summary of the present invention

The present invention is a production method for a metallic evacuated double-walled vessel according to claims 1-4 and a double-walled vessel according to claim 5. The essential characteristic thereof consists in the use in the method, or the presence on the vessel, of a sealing material consisting of a low temperature melting glass, the softening temperature of which is from 200°C to 600°C, in the vicinity of an evacuation opening leading to an evacuated volume between the walls of the vessel.

Because the evacuation hole punched in one of either of the inner vessel or the outer vessel of the metallic double-walled vessel is sealed using a sealing material which consists of low temperature melting glass which softens at a temperature of from 200°C to 600°C, it is possible to reduce the temperature for vacuum sealing as compared to the conventional brazing method. For this reason, the temperatures used in the vacuum heating furnace can be lowered, equipment costs are reduced, and the production costs for the article are lowered. The low temperature melting glass used in the present invention is advantageous in that, even if oxidants are present on the surface of the metallic double-walled vessel, wettability is not impaired, making it possible to carry out a preferable sealing. Accordingly, it is also possible to omit the process of removing oxidants are removed by heating the surface of the metallic double-walled vessel to a high temperature. Production costs for the evacuated double-walled vessel are thereby further reduced.

Further, when compared to the convention method using a chip tube, it is possible to produce a more compact article as there is no remnant of the chip tube to protrude out. Moreover, with regard to the sealing process, because the treatment in the vacuum heating furnace may be carried out with stability for a large number of articles simultaneously without the introduction of human labor, large capacity production is easily achieved and it is possible to reduce production costs. Moreover, with regard to the process of vacuum evacuation of the space between the inner and outer vessels, because the entire vessel is heated under a vacuum, there is no notable oxidation of the outer surface of the vessel, thus a final removal step may be omitted. Costs can therefore be reduced.

Further, all vacuum evacuation and sealing operations can be carried out at a comparatively low temperatures in the range of from 200°C to 600°C, and the hardness of metallic material such as stainless steel or the like which constructs the vessel can be increased by low temperature annealing. As a result, using a metallic material having a high degree of hardness, the vessel can be made thinner, and the overall weight of the evacuated double-walled vessel can be reduced.

### DETAILED DESCRIPTION OF THE PREFERRED EMBODIMENTS OF THE PRESENT INVENTION

### Embodiment 1

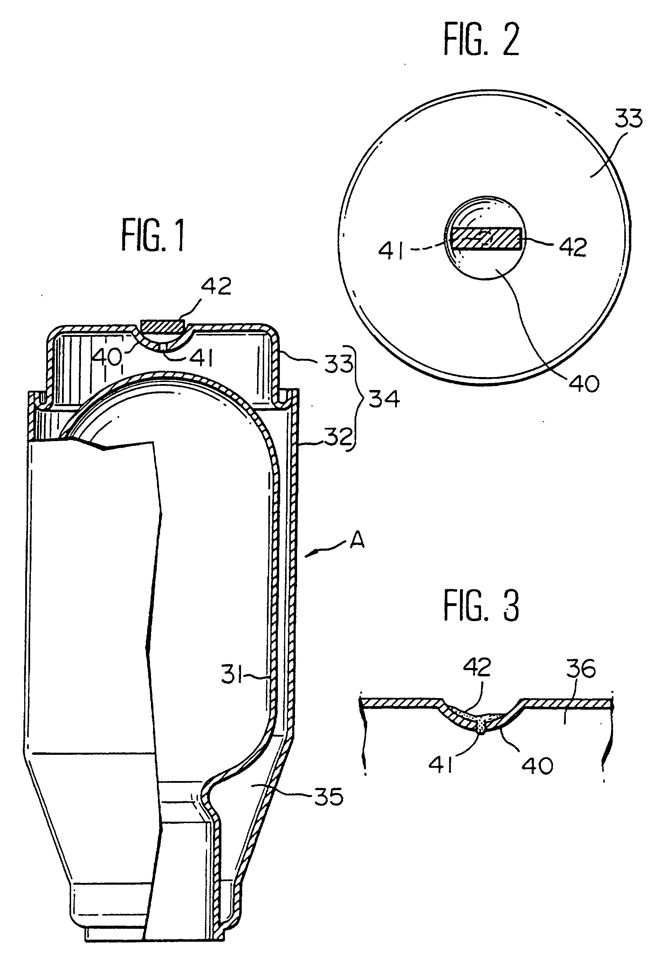

Figures 1 through 3 are provided to explain a first embodiment of the production method for a metallic evacuated double-walled vessel according to the present invention. The metallic evacuated double-walled vessel produced here is a portable isotherm bottle which consists of a stainless steel inner vessel 31 and a stainless steel outer vessel 34 which are joined together, with a cavity 35 between the inner vessel 31 and the outer vessel 34 forming an evacuated thermal insulating layer.

In outer vessel 34, outer vessel bottom member 33 is joined air tightly to the bottom end of approximately cylindrical outer vessel body 32. Concavity 40 which is indented to form a semispherical shape is formed to the approximate center portion of outer vessel bottom member 33. A small evacuation hole 41 is punched in the center of concavity 40. The mouth diameter of evacuation hole 41 is preferably 0.1 to 2.0 mm.

In order to produce this isotherm bottle, inner vessel 31 and outer vessel body 32 are air tightly joined at the mouth portions thereof, while at the same time, outer vessel bottom member 33 is air tightly joined to outer vessel body 32, forming prior-to-sealing double-walled vessel A (hereinafter, referred to as double-walled vessel). Next, as is shown in Figures 2 and 3, the mouth portion of double-walled vessel A is directed downward, and a rod shaped sealing material 42 is attached inside concavity 40 of outer vessel bottom member 33 with a interval of space maintained between sealing material 42 and evacuation hole 41.

A low temperature melting glass, the softening point of which is from 200°C to 600°C is used in sealing material 42. Solder glass derived from B₂O₃-PbO, B₂O₃-ZnO, PbO-B₂O₃-ZnO-SiO₂, PbO-B₂O₃-Al₂O₃-SiO₂, PbO-B₂O₃-SiO₂, or PbO-B₂O₃-BaO-SiO₂ may be used as the low temperature melting glass. In particular, a material having a coefficient of thermal expansion similar to that of stainless steel which is the material of the double-walled vessel is preferable.

To attach rod shaped sealing material 42 in concavity 40, sealing material 42 may be simply pushed into concavity 40. However, in order to prevent positional displacement of sealing material 42, it is also possible to coat an adhesive agent to both ends of sealing material 42 and thereby fix it firmly inside concavity 40. Moreover, the shape of sealing material 42 is not limited to a rod shape, but may also be a solid shape.

Next, double-walled vessel A, to which sealing material 42 is attached, is transferred to and disposed within a vacuum heating furnace in an inverted position. Vacuum heating is carried out by vacuum evacuating the inside of the furnace while heating is performed. The temperature for the vacuum heating is set so as to be within the range of 200°C to 600°C and such that sealing material 42 does not soften. The gas in the cavity between inner vessel 31 and outer vessel 34 is expelled through evacuation hole 41. After evacuating to a pressure of 1 x 10⁻² torr or less, the temperature inside the furnace is raised to a temperature which is in the range from 200°C to 600°C and which is a temperature above the softening point of sealing material 42. Sealing material 42 is softened and drops down under its own weight onto evacuation hole 41 and the vicinity thereabout, sealing evacuation hole 41. Following this vacuum sealing, the vessel is removed from the furnace. As a result, as shown in Figure 3, evacuation hole 41 is sealed with sealing material 42 which consists of low temperature melting glass, thus obtaining a stainless steel isotherm bottle (metallic evacuated double-walled vessel) having an evacuated thermal insulating layer 36 between inner vessel 31 and outer vessel 34.

Via this vacuum sealing process, the double-walled vessel is heated at a temperature in the range of 200°C to 600°C, and the hardness of the stainless steel, which is the material of the double-walled vessel, is increased by low temperature annealing. Accordingly, the thickness of the stainless steel necessary to obtain the required shock and impact resistance is reduced. Thus, the vessel can be made thinner.

In the production method according to the present embodiment, by sealing the evacuation hole of the metallic double-walled vessel by using a sealing material consisting of a low temperature melting glass which has a softening temperature in the range of 200° to 600°C, it is possible to reduce the temperature of vacuum sealing as compared to the convention brazing method. For this reason, the temperature utilized within the vacuum heating furnace can be lowered, equipment costs are reduced, and the production costs for the article can be lowered. This low temperature melting glass is advantageous in that wettability is not impaired even if oxidants are present on the surface of the double-walled vessel, making it possible to carry out a preferable sealing. Accordingly, it is possible to omit the process for removing oxidants by heating to a high temperature the surface of the double-walled vessel. Thus, the production costs for an evacuated double-walled vessel can be reduced.

Further, when compared to the convention method using a chip tube, it is possible to produce a more compact product as there is no remnant of the chip tube to protrude out. Moreover, with regard to the sealing process, because treatment in the vacuum heating furnace may be carried out with stability for a large number of articles simultaneously without the introduction of human labor, large capacity production is easily achieved and it is possible to reduce production costs. Moreover, with regard to the process of vacuum evacuation of the space between the inner and outer vessels, because the entire vessel is heated under a vacuum, there is no notable oxidation of the outer surface of the vessel, therefore, a final removal process can be omitted. Thus, costs can be reduced.

Further, all vacuum evacuation and sealing operations can be carried out at comparatively low temperatures in the range of from 200°C to 600°C, and the hardness of the metallic material such as stainless steel or the like which composes the vessel can be increased by low temperature annealing. As a result, using a metallic material having a high degree of hardness, the vessel can be made thinner, and the overall weight of the evacuated double-walled vessel can be reduced.

### Embodiment 2

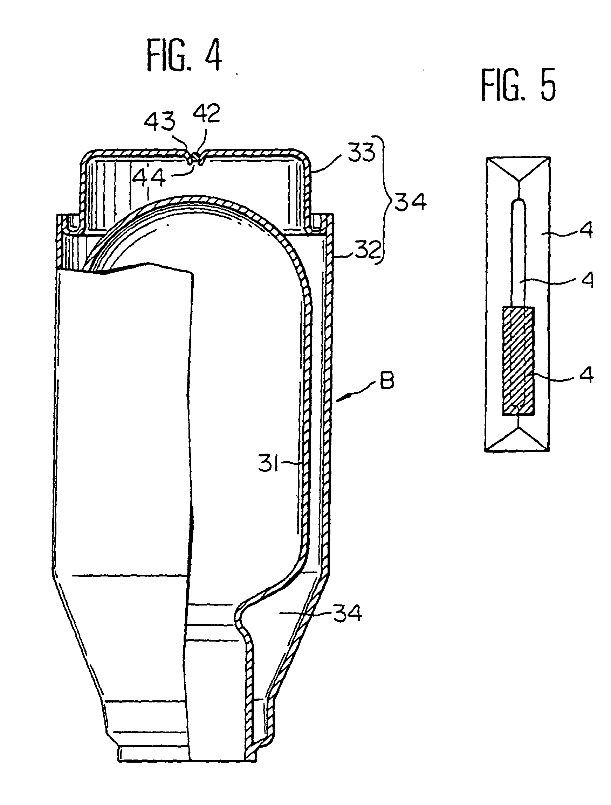

Figures 4 and 5 are provided to explain a second embodiment of the production method for a metallic evacuated double-walled vessel according to the present invention. The double-walled vessel B shown in these figures is equipped with almost entirely the same structural elements as those shown in Figures 1 and 2. Structural elements shown in Figures 4 and 5 which are identical to those in Figures 1 and 2 have been labeled with the same symbols. In the double-walled vessel B shown in Figures 4 and 5, a long groove 43 is formed in the center portion of the bottom surface side of outer vessel bottom member 33, and a slit-shaped long hole 44 (evacuation hole) is formed in the bottom of long groove 43. As is shown in Figure 5, a rod shaped sealing material 42 consisting of low temperature melting glass and having a length which is shorter than the length of the slit shaped long hole 44 is disposed inside long groove 43 of the double-walled vessel B. Following this, as in the previous example, double-walled vessel B is placed inside a vacuum heating furnace, and vacuum heating is carried out while heating to a temperature which is within the range of 200°C to 600°C and is below the temperature at which sealing material 42 softens. After evacuating to a pressure of 1 x 10⁻² torr or less, the temperature inside the furnace is raised to a temperature which is in the range of from 200°C to 600°C and which is a temperature above the softening point of sealing material 42. Sealing material 42 is softened and flows onto slit shaped long hole 44, sealing it, and a stainless steel isotherm bottle (evacuated double-walled vessel) is thereby obtained.

### Embodiment 3

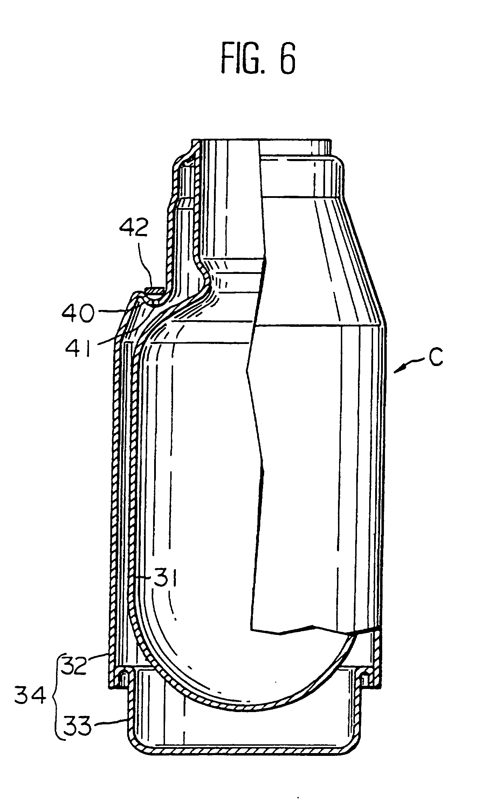

Figures 6 is provided to explain a third embodiment of the production method for a metallic evacuated double-walled vessel according to the present invention. The double-walled vessel C shown in these figures is equipped with almost entirely the same structural elements as those shown in Figures 1 and 2. Structural elements shown in Figure 6 which are identical to those in Figures 1 and 2 have been labeled with the same symbols. In the double-walled vessel C shown in Figure 6, a pocket shaped concavity 40 is provided to the shoulder portion of the outer vessel body 32, and a small evacuation hole 41 is formed inside concavity 40.

To seal this double-walled vessel C, the opening of double-walled vessel C is directed upward, and a rod shaped sealing material 42 consisting of low temperature melting glass and is attached inside concavity 40. Double-walled vessel C is then placed inside a vacuum heating furnace, and, as in the previous example, vacuum heating is carried out while heating to a temperature which is within the range of 200°C to 600°C and is below the temperature at which sealing material 42 softens. After evacuating to a pressure of 1 x 10⁻² torr or less, the temperature inside the furnace is raised to a temperature which is in the range of from 200°C to 600°C and which is above the softening point of sealing material 42. Sealing material 42 is softened and drops down under its own weight directly onto evacuation hole 41 and the vicinity therearound, sealing evacuation hole 41. After vacuum sealing, the vessel is removed from the furnace, and a stainless steel isotherm bottle (evacuated double-walled vessel) is thereby obtained.

Moreover, because vacuum sealing is carried out by allowing the melted sealing hot charge to drop directly down into the evacuation hole, such sealing defects as insufficient plugging of the evacuation hole by the sealing hot charge due to the surface tension forces of the sealing hot charge are eliminated, and the quantity of sealing hot charge required may be reduced, thus permitting a reduction in production costs.

## Claims

1. A method for making a metallic evacuated double-walled vessel wherein said vessel (A, B, C) consists of metallic inner (31) and outer (34) vessels and the space between said inner vessel and said outer vessel forms an evacuated thermal insulating layer, the method comprising the steps of :
(a) forming a double-walled vessel by joining together said inner vessel (31) and said outer vessel (34), one of either said inner vessel and said outer vessel having an evacuation hole (41, 44) ;
(b) disposing a sealing material (42) to the vicinity of said evacuation hole ;
(c) placing said double-walled vessel inside a vacuum heating furnace, and vacuum evacuating the cavity between said inner vessel and said outer vessel at a temperature lower than the softening temperature of said sealing material ;
(d) heating said double-walled vessel to a temperature above the softening temperature of said sealing material, causing said sealing material to melt and flow into said evacuation hole, to seal said evacuation hole ;
**characterised in that** said sealing material consists of a low temperature melting glass having a softening temperature in the range of 200°C to 600°C.

2. A method for making a metallic evacuated double-walled vessel according to claim 1, wherein a concavity (40) and the evacuation hole (41) are formed in the bottom portion (33) of said outer vessel (34) of said double-walled vessel (1), **characterised in that** said sealing material (42) is disposed within said concavity at a position so as to be directly above said evacuation hole when said double-walled vessel is inverted with an interval of spacing being maintained between said sealing material and said evacuation hole, said double-walled vessel is inverted so that the mouth portion thereof is directed downward and is placed in a vacuum heating furnace, and vacuum evacuation and vacuum sealing are carried out.

3. A method for making a metallic evacuated double-walled vessel according to claim 1, wherein a long groove (43) is formed in the bottom portion (32) of said outer vessel (B) of said double-walled vessel and a slit shaped long hole (44) is formed in the bottom of said long groove, said double-walled vessel is inverted so that the mouth portion thereof is directed downward, said sealing material (42) is rodshaped inserted inside said long groove, said double-walled vessel is placed inverted inside a vacuum heating furnace, and vacuum evacuation and vacuum heating are carried out.

4. A method for making a metallic evacuated double-walled vessel according to claim 1, **characterized in that** a concavity and an evacuation hole are formed in the shoulder portion of said outer vessel (34) of said double-walled vessel (C), the sealing material (42) is disposed within said concavity (40) at a position so as to be directly above said evacuation hole (41) with an interval of spacing being maintained between said and said evacuation hole, said double-walled sealing material and said evacuation hole, said double-walled vessel is placed upright so that the mouth portion thereof is directed upward in a vacuum furnace, and vacuum evacuation and vacuum sealing are carried out.

5. A metallic evacuated double-walled vessel (A, B, C), said vessel consisting of metallic inner and outer vessels and the space between said inner vessel and said outer vessel forming an evacuated thermal insulating layer, wherein an evacuation hole formed in one either of said inner vessel and said outer vessel is vacuum sealed with a sealing material, **characterised in that** said sealing material consists of a low temparature melting glass which softens at a temperature of from 200°C to 600°C.

## Patentansprüche

1. Verfahren zur Herstellung eines evakuierten, doppelwandigen Metallbehälters, wobei der Behälter (A,B,C) aus inneren (31) und äußeren (34) Metallbehältern besteht und der Raum zwischen dem inneren Behälter und dem äußeren Behälter eine evakuierte thermische Isolierschicht bildet, wobei das Verfahren folgende Schritte umfaßt:
(a) Bilden eines doppelwandigen Behälters durch Zusammenfügen des inneren Behälters (31) und des äußeren Behälters (34), wobei entweder der innere Behälter oder der äußere Behälter ein Evakuierungsloch (41,44) aufweist,
(b) Anordnen eines Dichtungsmaterials (42) in der Umgebung des Evakuierungslochs,
(c) Anordnen des doppelwandigen Behälters innerhalb eines Vakuumofens und Evakuieren des Hohlraums zwischen dem inneren Behälter und dem äußeren Behälter bei einer niedrigeren Temperatur als der Erweichungstemperatur des Dichtungsmaterials zu einem Vakuum,
(d) Erwärmen des doppelwandigen Behälters auf eine Temperatur über der Erweichungstemperatur des Dichtungsmaterials, um zu bewirken, daß das Dichtungsmaterial schmilzt und in das Evakuierungsloch fließt, um das Evakuierungsloch abzudichten,
**dadurch gekennzeichnet, daß** das Dichtungsmaterial aus bei niedriger Temperatur schmelzendem Glas mit einer Erweichungstemperatur im Bereich von 200°C bis 600°C besteht.

2. Verfahren zur Herstellung eines evakuierten, doppelwandigen Metallbehälters gemäß Anspruch 1, wobei eine Konkavität (40) und das Evakuierungsloch (41) im Bodenabschnitt (33) des äußeren Behälters (34) des doppelwandigen Behälters (1) ausgebildet werden, **dadurch gekennzeichnet, daß** das Dichtungsmaterial (42) innerhalb der Konkavität an einer Position so angeordnet ist, daß es sich direkt über dem Evakuierungsloch befindet, wenn der Behälter umgedreht wird, wobei ein Beabstandungsintervall zwischen dem Dichtungsmaterial und dem Evakuierungsloch aufrechterhalten wird, und daß der doppelwandige Behälter so umgekehrt wird, daß der Mündungsabschnitt desselben nach unten gerichtet ist, und in einen Vakuumofen plaziert wird, wobei eine Vakuum-Evakuierung und eine Vakuum-Versiegelung ausgeführt werden.

3. Verfahren zur Herstellung eines evakuierten, doppelwandigen Metallbehälters gemäß Anspruch 1, wobei eine lange Rille (43) im Bodenabschnitt (32) des äußeren Behälters (B) des doppelwandigen Behälters geformt wird, und ein schlitzförmiges Langloch (44) in dem Boden der langen Rille geformt wird, der doppelwandige Behälter umgekehrt wird, so daß der Mündungsabschnitt desselben nach unten gerichtet ist, das Dichtungsmaterial (42) in Stabform innerhalb der langen Rille eingesetzt wird, das doppelwandige Gefäß umgekehrt in einem Vakuumofen angeordnet wird, und eine Vakuum-Evakuierung und eine Vakuum-Erwärmung ausgeführt werden.

4. Verfahren zur Herstellung eines evakuierten, doppelwandigen Metallbehälters gemäß Anspruch 1, **dadurch gekennzeichnet, daß** eine Konkavität und ein Evakuierungsloch im Schulterabschnitt des äußeren Behälters (34) des doppelwandigen Behälters (C) ausgebildet werden, das Dichtungsmaterial (42) innerhalb der Konkavität (40) an einer Position angeordnet wird, daß es sich direkt über dem Evakuierungsloch (41) befindet, wobei ein Beabstandungsintervall zwischen dem Dichtungsmaterial und dem Evakuierungsloch aufrechterhalten wird, der doppelwandige Behälter aufrecht plaziert wird, so daß der Mündungsabschnitt desselben in einem Vakuumofen nach oben gerichtet ist, und eine Vakuum-Evakuierung sowie eine Vakuum-Versiegelung ausgeführt werden.

5. Evakuierter, doppelwandiger Metallbehälter (A,B,C), wobei der Behälter aus metallischen inneren und äußeren Metallbehältern besteht und der Raum zwischen dem inneren Behälter und dem äußeren Behälter eine evakuierte thermische Isolierschicht bildet, wobei ein Evakuierungsloch, das entweder in dem inneren Gefäß oder dem äußeren Gefäß ausgebildet ist, mit einem Dichtungsmaterial vakuumversiegelt ist, **dadurch gekennzeichnet, daß** das Dichtungsmaterial aus einem bei niedriger Temperatur schmelzenden Glas besteht, das bei einer Temperatur von 200°C bis 600°C erweicht.

## Revendications

1. Procédé de fabrication d'un récipient métallique à double paroi vidé dans lequel ledit récipient (A, B, C) se compose de récipients métalliques intérieur (31) et extérieur (34) et l'espace séparant ledit récipient intérieur et ledit récipient extérieur forme une couche d'isolation thermique vidée, le procédé comprenant les étapes consistant à :
(a) former un récipient à double paroi en joignant ensemble ledit récipient intérieur (31) et ledit récipient extérieur (34), l'un des deux parmi ledit récipient intérieur et ledit récipient extérieur ayant un trou d'évacuation (41, 44) ;
(b) disposer un matériau de scellement (42) à proximité dudit trou d'évacuation ;
(c) placer ledit récipient à double paroi à l'intérieur d'un four de chauffage à vide, et vider sous vide la cavité entre ledit récipient intérieur et ledit récipient extérieur à une température inférieure à la température de ramollissement dudit matériau de scellement ;
(d) chauffer ledit récipient à double paroi à une température supérieure à la température de ramollissement dudit matériau de scellement, ce qui entraîne la fusion et l'écoulement dudit matériau de scellement dans ledit trou d'évacuation, de manière à sceller ledit trou d'évacuation ;
**caractérisé en ce que** ledit matériau de scellement se compose d'un verre de fusion à basse température ayant un point de ramollissement qui se situe dans la plage allant de 200°C à 600°C.

2. Procédé de fabrication d'un récipient métallique à double paroi vidé selon la revendication 1, dans lequel une concavité (40) et le trou d'évacuation (41) sont formés dans la partie inférieure (33) dudit récipient extérieur (34) dudit récipient à double paroi (1), **caractérisé en ce que** ledit matériau de scellement (42) est disposé à l'intérieur de ladite concavité dans une position telle qu'il se situe directement au-dessus dudit trou d'évacuation lorsque ledit récipient à double paroi est renversé, un espace étant maintenu entre ledit matériau de scellement et ledit trou d'évacuation, ledit récipient à double paroi est renversé de telle sorte que la partie formant ouverture de celui-ci soit orientée vers le bas et il est placé dans un four de chauffage à vide, et le vidage sous vide ainsi que le scellement sous vide sont réalisés.

3. Procédé de fabrication d'un récipient métallique à double paroi vidé selon la revendication 1, dans lequel une rainure longue (43) est formée dans la partie inférieure (32) dudit récipient extérieur (B) dudit récipient à double paroi et un long trou en forme de fente (44) est formé dans le fond de ladite rainure longue, ledit récipient à double paroi est renversé de telle sorte que la partie formant ouverture de celui-ci soit orientée vers le bas, ledit matériau de scellement (42) se présente sous la forme d'une baguette et est inséré à l'intérieur de ladite rainure longue, ledit récipient à double paroi est placé à l'envers à l'intérieur d'un four de chauffage à vide, et le vidage sous vide ainsi que le chauffage à vide sont réalisés.

4. Procédé de fabrication d'un récipient métallique à double paroi vidé selon la revendication 1, **caractérisé en ce qu'**une concavité ainsi qu'un trou d'évacuation sont formés dans la partie formant épaulement dudit récipient extérieur (34) dudit récipient à double paroi (C), le matériau de scellement (42) est disposé à l'intérieur de ladite concavité (40) dans une position telle qu'il se situe directement au-dessus dudit trou d'évacuation (41), un espace étant maintenu entre ledit matériau de scellement et ledit trou d'évacuation, ledit récipient à double paroi est placé à la verticale de telle sorte que la partie formant ouverture de celui-ci soit orientée vers le haut dans un four à vide, et le vidage sous vide ainsi que le scellement sous vide sont réalisés.

5. Récipient métallique à double paroi vidé (A, B, C), ledit récipient se composant de récipients métalliques intérieur et extérieur et l'espace séparant ledit récipient intérieur et ledit récipient extérieur formant une couche d'isolation thermique, dans lequel un trou d'évacuation formé dans l'un ou l'autre récipient parmi ledit récipient intérieur et ledit récipient extérieur est scellé sous vide à l'aide d'un matériau de scellement, **caractérisé en ce que** ledit matériau de scellement se compose d'un verre de fusion à basse température qui se ramollit à une température comprise entre 200°C et 600°C.
